# EUROPEAN PATENT SPECIFICATION

(11) **EP 2 992 755 B1**
(45) Date of publication and mention of the grant of the patent: **26.07.2017**
(21) Application number: 14183364.0
(22) Date of filing: 03.09.2014
(51) Int. Cl.: A01G 3/053, F16P 3/24, F16P 3/20, B27B 17/08, F16D 59/02

(54) **Switch and brake system for handheld gardening equipment**
Schalter und Bremssystem für tragbare Gartenausrüstung
Commutateur et système de freinage pour équipement portable de jardinage

(43) Date of publication of application: 09.03.2016
(73) Proprietor: ROBERT BOSCH GMBH, 70442 Stuttgart (DE)
(72) Inventor: Soltesz, Robert, 3530 Miskolc (HU); Szatmari, Zoltan, 3712 Sajóvámos (HU)

(56) References cited:
- DE-A1-102012 015 814
- FR-A1- 2 558 567
- GB-A- 2 325 388

## Description

The present invention relates to handheld gardening equipment, specifically motorised equipment such as hedge-trimmers.

Motorised handheld devices used in trimming, pruning and cutting (such as hedge trimmers or chainsaws) are well known in the art, and provide a faster and easier way to trim and prune individual shrubs or hedges than manual devices such as shears. They are powered by either combustion or electrical motors, and in the interests of safety typically employ a dual-input system that ensures that the device will only operate whilst two independent triggers are held down, see e.g. GB 2 325 388 A. This requires that the device be securely held in both hands to operate the motor and cutting elements. If the operator should release one of his/her hands (e.g. through a fall) from the triggers, power will be cut from the motor. Additionally, these devices also employ a brake system which prevents the cutting device from "coasting" once the power has been disengaged, and brings the cutting elements to a stop as soon as possible. The switch and brake systems employed in the prior art have been electronically actuated, and rely on the breaking of electrical circuits to cut power to the motor and brake the cutting elements. However, these previous dual-switch safety systems have been expensive to implement.

The present invention provides an improved switch and brake system by replacing electronic switch and braking systems with a mechanical one. The present invention is simpler, more reliable, and cheaper to implement. Furthermore, the mechanical switch and brake system may provide shorter actuation times, reducing the risk of accidental injury.

According to the present invention as defined in claim 1, there is provided a combined switch and brake control system for a power tool comprising a motor which drives a cutting element. The system comprises a switch operable to activate the motor, a brake operable to transmit a braking force to the cutting element, an operating member movable from a braking position in which the operating member causes the brake to be applied, and the switch to be deactivated, to an activating position in which the operating member releases the brake and activates the switch. The operating member is resiliently biased towards the braking position. There is also provided a first operating mechanism coupled between a first user control and the operating member, and a second operating mechanism coupled between a second user control and the operating member. The operating mechanisms are configured to move the operating member from the braking position to the activating position against the biasing force only when both first and second user controls receive a user input. The benefits of the present invention include a more reliable, mechanical safety mechanism than electronically activated ones. The present invention may also provide quicker response times so that the brake is engaged, and switch deactivated soon after one of the user inputs is removed.

In a preferred embodiment, the operating mechanisms are mechanical linkages which move on receipt of a user input to their respective user controls which enable the user controls to be located separately from the operating member.

In a further preferred embodiment, when user inputs are applied to both user controls the movement of each operating mechanism is combined at the operating member to move the operating member from the braking position to the activating position. This ensures that the operating member is only moved when both user inputs controls are activated.

In a further preferred embodiment one of the first and second operating mechanisms includes a projection which engages with and moves the operating member from the braking position to the activating position. Preferably still the projection engages with a slot in the operating member. Preferably still, the slot is substantially L-shaped.

In a further preferred embodiment, the operating member includes a cam surface which engages with the switch in the activating position.

In a further preferred embodiment, the operating member includes a brake-activating projection which engages with the brake in the braking position.

In a further preferred embodiment, the user controls are mechanical triggers.

In a further preferred embodiment, the second user control comprises a plurality of user controls, any one of which may receive a user input to move the operating member when the first user control also receives a user input. Preferably still, the second user control comprises a plurality of mechanical triggers configured such that when one of the mechanical triggers is moved by a user input, the other mechanical triggers remain stationary.

In a further preferred embodiment, the first and second user controls are provided on separate operating handles.

In a further embodiment, the present invention is incorporated into a garden power tool, and preferably still, the tool is a hedge trimmer.

Another aspect of the present invention is a brake system for a motor. The system comprises a rotating brake disc, a rotating blocking washer immediately adjacent the brake disc, and a projection for engagement with the blocking washer. The blocking washer is formed an annular disc body with at least one break section in the circumference, i.e. an indent. When the brake is activated, the projection engages with the break section and prevents rotation of the blocking washer. When the blocking washer is prevented from rotating, the friction force from the adjacent rotating brake disc causes provides a braking force which slows down and eventually stops the brake disc, and the remaining rotating and moving elements of the motor coupled to the brake disc.

Preferably, the at least one break section is formed by an incomplete collar surrounding the disc body. Preferably still, the brake comprises two break discs located on either side of the blocking washer, for greater frictional force.

A further embodiment of the present invention provides a user control comprising a plurality of mechanical triggers. The triggers are each configured such that they are orientated differently from each other, i.e. facing in different directions. However, when any of the triggers receives a user input, they work to mechanically move a single corresponding operating mechanism in the same direction.

Preferred embodiments of the present invention will now be described by way of example only, with reference to the accompanying diagrams, in which:
Figure 1 is a perspective view of a handheld hedge trimmer incorporating the improved switch and brake system of the present invention.
Figure 2 is an alternative perspective view of a handheld hedge trimmer incorporating the improved switch and brake system of the present invention, without the front guard attached.
Figure 3 is a perspective view of the internal components and triggers of the rear and front handles in relative position to each other.
Figure 4 is an elevation view of the internal components of the rear handle.
Figure 5 is an elevation view of the rear lever and main lever.
Figure 6 is a perspective view of the rear lever and main lever.
Figure 7 is a perspective view of the front handle.
Figure 8 is a perspective view of the internal components of the front handle
Figure 9 is a close-up view of the shoulder engagement between the top trigger and right trigger.
Figure 10 is a perspective view of the connection between the main lever and the handle lever.
Figure 11 shows the connection between the main lever and operating member.
Figure 12 shows the switch and brake system in a first, inactivated, position.
Figure 13 shows the switch and brake system in a second, semi-activated, position.
Figure 14 shows the switch and brake system in a third, semi-activated, position.
Figure 15 shows the switch and brake system in a fourth, fully-activated, position.
Figure 16 is a perspective view of the inner components of the brake system.
Figure 17 is a perspective view of further components of the brake system.
Figure 18 is a perspective view of the fully constructed brake system.
Figure 19 is a cross-section view of the fully constructed brake system.
Figure 20 is a plan view of the operating member, brake and switch system.

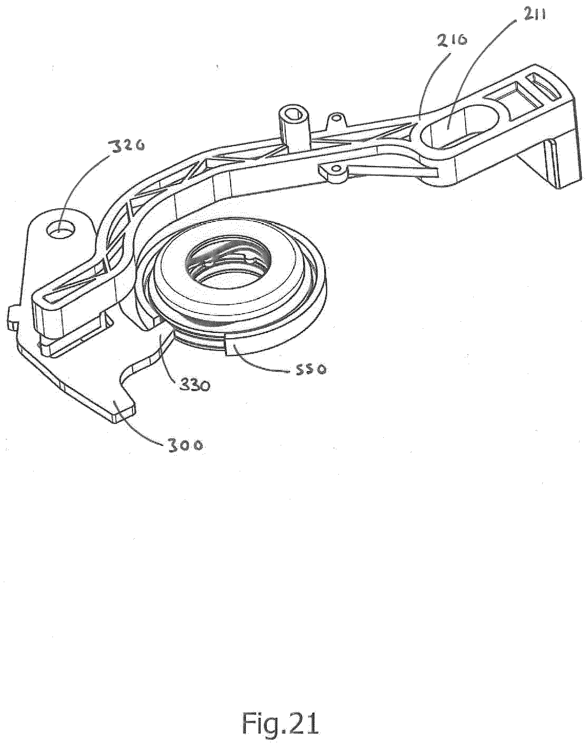

Figure 21 is a perspective view of the operating member engaged with the brake.
Figure 22 is a perspective underside-view of all moving components of the switch and brake system.

The present embodiment incorporates the invention into a handheld electric hedge trimmer, although it will be appreciated that it may also be implemented in a number of other devices.

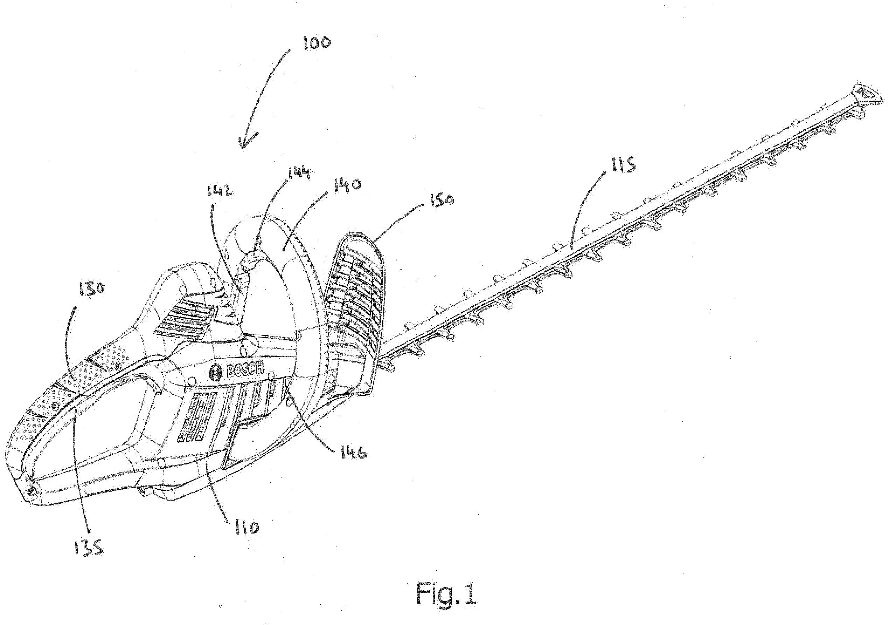

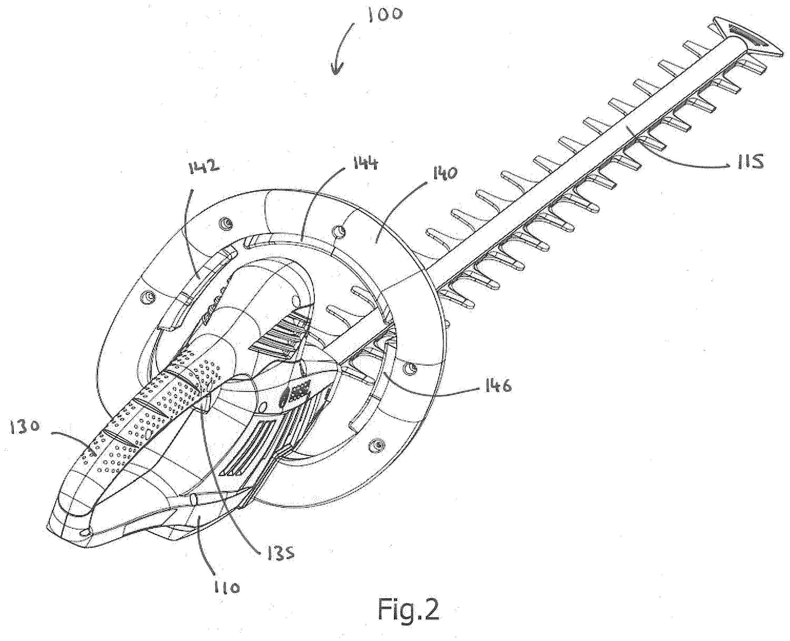

As shown in figures 1 and 2, the hedge trimmer (100) comprises a main body (110), cutting elements (115), rear (130) and forward (140) handles, and a front guard (150 - not shown in fig.2).

The cutting elements (115) are provided as a finger-bar cutter, or sickle cutter, and comprises a long bar on which are mounted perpendicular fingers, and an overlying secondary bar which is moveable back and forth along the first bar. The second bar comprises perpendicular sharp sickle sections (blades), mirroring the fingers of the first bar. The sickle bar is driven back and forth along the first bar, and the hedge is cut between the sharp edges of the sickle sections and the finger-plates.

The front guard (150) prevents clippings and other cutting debris from causing injury to the user.

The rear handle (130) is a longitudinally-aligned grip and includes a rear trigger (135) extending along the underside of the handle (130).

The forward handle (140) is an annular grip perpendicular to both the longitudinal axis of the device (100) and the rear handle (130). The front handle (14) comprises three forward triggers; the left trigger (142), the top trigger (144) and the right trigger (146). Each of the three triggers are found on the inside of the annular front handle (140).

In the interests of safety, the device utilises a dual-input system that will only allow the motor to be activated and the brake to be disengaged if both the rear trigger (135) and at least one the left trigger (142), top trigger (144) and right trigger (146) are activated. In this way, the device requires the user to grip and hold both the rear handle (130) and front handle (140) in order to operate the device (100).

Should neither the rear trigger (135) nor at least one of the front triggers (142, 144, 146) be activated, the device (100) will disengage power to the motor, and engage the braking mechanism.

It is the mechanical realisation of this switch and brake mechanism that forms the basis of the invention, and further detail is provided below.

The device (100) is held by the end user with one hand on the rear handle (130) and the other on the front handle (140).

The rear trigger (135) on the underside of the rear handle (130) is activated by squeezing or pulling the rear trigger (135) upwards, toward the rear handle (130).

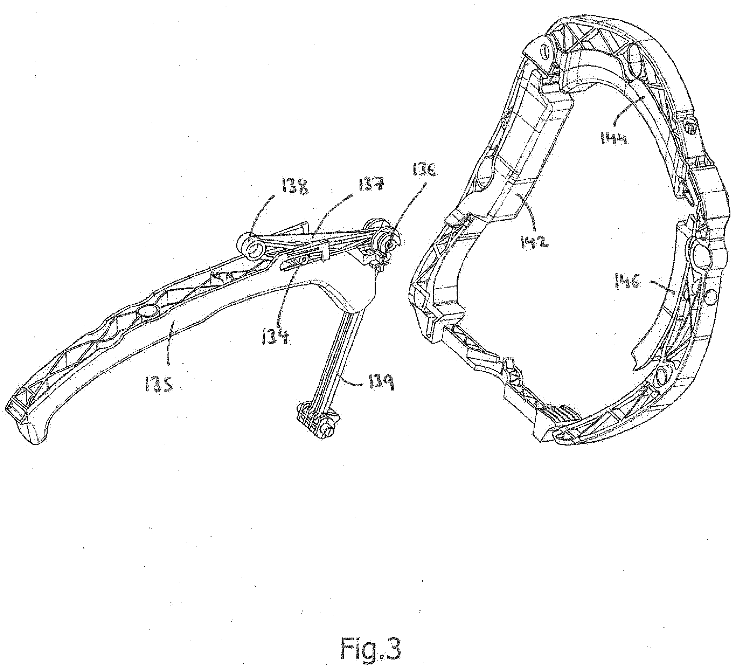

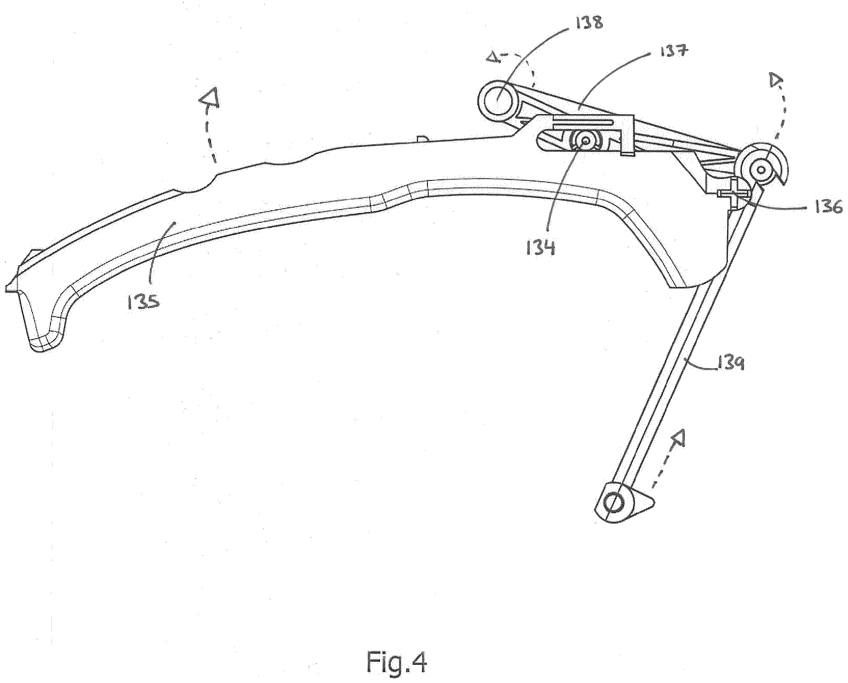

As shown in figures 3 and 4, the rear trigger mechanism comprises the rear trigger (135) which rotates about a pivot (136) towards the front of the trigger, a rocker (137) which rotates about a pivot (138) towards the rear of the rocker, and a rear lever bar (139).

The rocker (137) sits atop the rear trigger (135) just behind the pivot (136) of the rear trigger (135). The rear trigger (135) and rocker (137) engage each other via a spigot and groove arrangement (134) in between their relative pivot points (136, 138). The spigot is formed horizontally outward from the rocker (137) and is trapped inside an elongate groove in the rear trigger (135). As the rear trigger (135) is pulled upwards, and rotates about its forward pivot (136), the groove forces the spigot attached to the rocker upwards. This in turn counter-rotates the rocker (137) about it rear pivot (138), thus raising the forward end of the rocker (137).

The rear lever bar (139) has an upper end and a lower end, angled forward from the lower end to the upper end, and rotatably connected about its upper end to the forward end of the rocker (137).

As a result, as the rear trigger (135) is pulled upwards, the rear lever bar (139) is also brought upwards along with the forward end of the rocker (137).

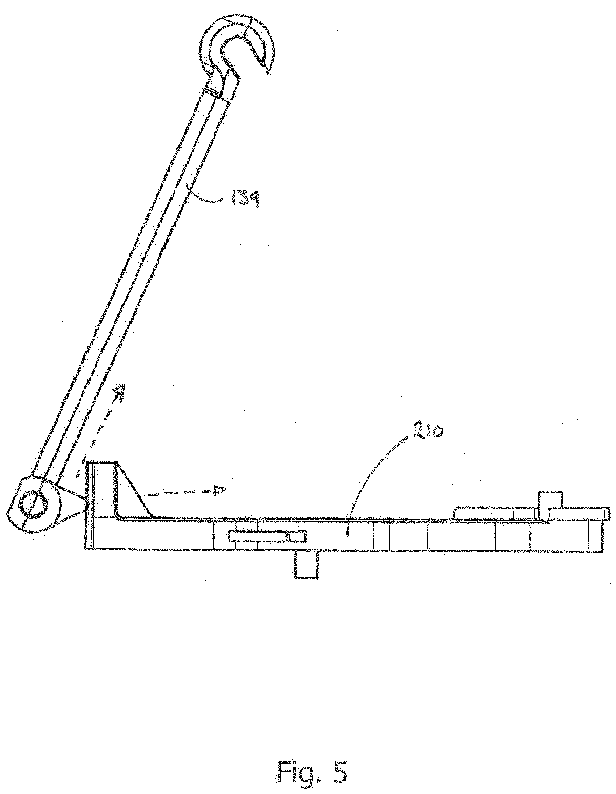

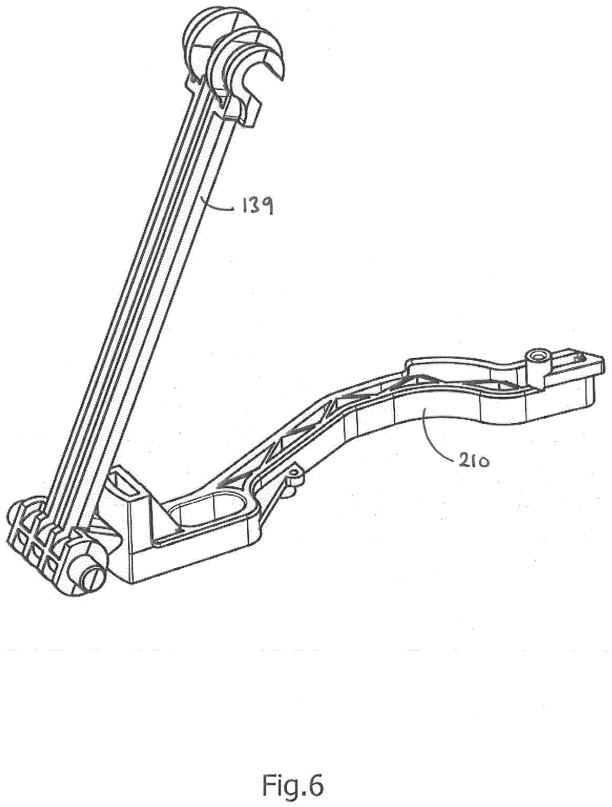

Figures 5 and 6 show the engagement of the rear lever bar (139) with the main lever (210).

The lower end of the rear lever bar (139) comprises at least one horizontally extending spigot which is guided in the main housing (110) by a closed cam. The rear lever's vertical motion is transformed into horizontal as the spigots are guided along the angled closed cam.

The main lever (210) is a horizontal bar designed to transmit the activation movement of the rear trigger (135) into back and forth horizontal movement. The rear lever bar (139) is connected at its lower end to the main lever (210) by a single action cam connection, therefore only a pressing action can be transmitted through them vice or versa. The horizontal motion of the rear lever bar (139) is thus transmitted to the main lever (210).

Therefore, when the rear trigger (135) is depressed, the main lever (210) is driven forwards horizontally. The effect of the movement of the rear trigger will be discussed further below. However, activation of the rear trigger (135) alone will not suffice to disengage the brake or activate the motor, and the user must also activate at least one of the front triggers (142, 144, 146) in order to do so. The front trigger mechanism will now be described, before the combined effect of both front and rear triggers is discussed.

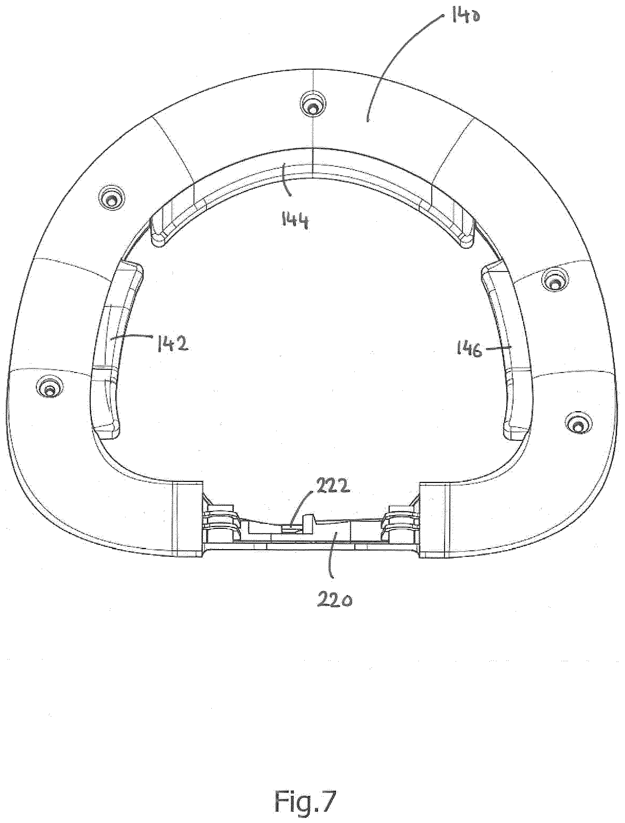

Figure 7 shows the front handle (140) removed from the body (110) of the device (100).

Any one of the front left trigger (142), the front top trigger (144) or the front right trigger (146), in combination with the rear trigger (135), may provide the additional activation mechanism necessary to disengage the brake and activate the motor.

Each of the front triggers (142, 146, 148) is activated by squeezing the triggers outwards towards the front handle (140). If any front trigger is activated, none of the remaining triggers will show any movement.

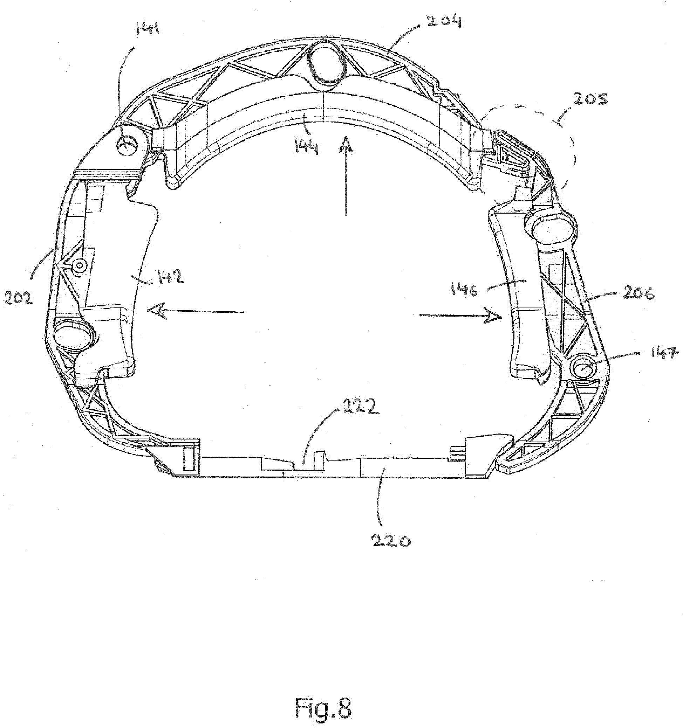

As showing in figure 8, the triggers (142, 144, 146) are each connected to a corresponding lever (202, 204, 206) behind them.

The front handle (140) also comprises a handle beam (220), a horizontal beam between the bottom ends of both the left lever (202) and right lever (206).

To ensure that the handle beam (220) always moves to the same direction when activated (e.g. to the left), the trigger and lever layout inside the front handle (140) is not symmetrical.

The left lever (202) and top lever (204) are connected at, and both pivot about, the same pivot point (141) situated towards the top of the left lever (202), and towards the left end of the top lever (204). The right lever (206) rotates about its own pivot point (147) towards the middle of the right lever (206).

As the left trigger (142) is depressed in the direction of the arrow, the left lever (202) rotates about the upper pivot (141) moving the lower end of the left lever (202) outwards (to the left in Fig. 8).

As the right trigger (146) is depressed in the direction of the arrow, the right lever (206) rotates about its central pivot (147), moving the lower end of the right lever (206) inwards (to the left in Fig. 8).

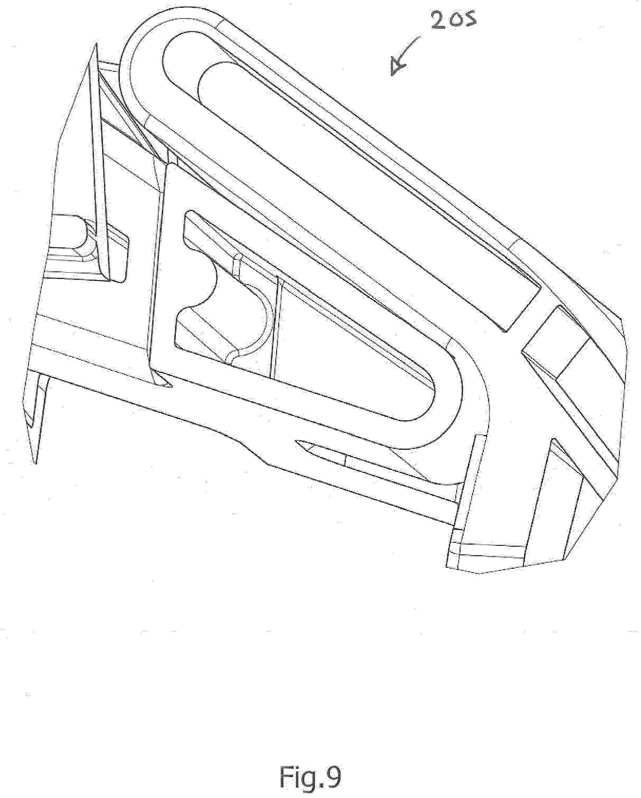

The top lever (204) acts upon the right lever (206) when activated, via a ramp connection (205), and its activation movement is transmitted through the right lever (206) to the handle beam (220). Figure 9 shows a close up view of the ramp connection (205). As the top trigger (144) is depressed upwards in the direction of the arrow, it rotates the top lever (204) about the left pivot (141), raising the right end of the lever (204). As the top lever (204) rises, the ramp connection (205) forces the upper end of the right lever (206) outward, rotating the right lever (206) about its central pivot (147), moving the lower end of the right lever (206) inwards (to the left in Fig. 8).

Therefore, the left trigger (142) when activated pulls sideways on the handle beam (220), moving it to the left. The right lever (206) when activated presses the handle beam (220) sideways, and the top lever (204) when activated, acting via the right lever (206), also presses the handle beam (220) sideways, both moving it left also.

The front handle (140) and front triggers (142, 144, 146) are designed so that depression of one of the triggers into the handle will not cause movement of the remaining triggers. This is achieved by two main features. Firstly, the left trigger (142) and left lever (202) are essentially independent of the other triggers/levers and pull on the handle beam (22), pulling it away from contact with the lower end of the right lever (206). Secondly, the ramp connection (205) transmits movement of the top lever (204) to the right lever (206), but not vice versa. When the right lever (206) is moved by the top trigger (144) and top lever (204), the right trigger (146) remains stationary as it is permitted to separate from the right lever (206).

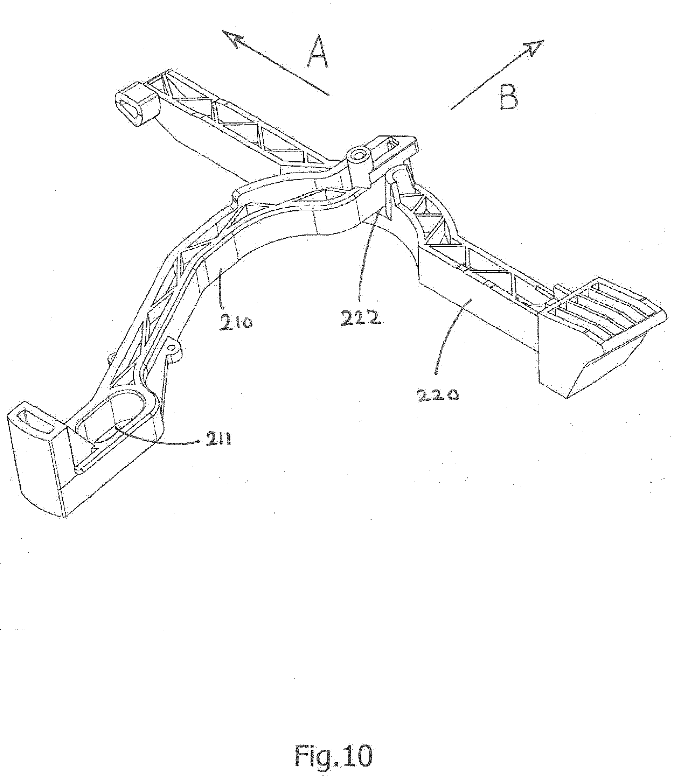

The combination of the main lever (210) and handle beam (220) will now be described. As shown in figure 10, the handle beam (220) is connected to the main lever (210) by a channel (222) in the handle beam, which allows the main lever (210) to move freely back and forth longitudinally in the channel (222), but forces the main lever (210) sideways (left) when any of the front triggers (142, 144, 146) are activated. When this activation (arrow A in Fig. 10) is carried out in combination with the movement of the main lever (210) (arrow B in Fig. 10), it is sufficient to disengage the brake and activate the motor of the device as described below.

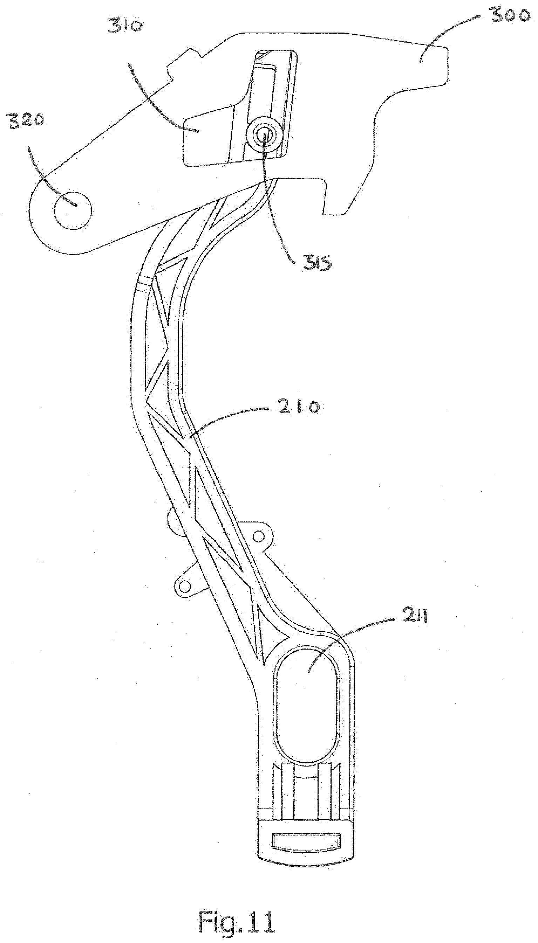

With reference to Fig. 11 the main lever (210) is maintained in place at the opposite end to a projection or pin (315) by a spigot (not shown) passing through an elongate groove (211), allowing the beam (210) to move back and forth along a its longitudinal axis, and rotate about the spigot (not shown), moving the projection (315) at the distal end in a longitudinal and lateral direction respectively.

As shown in figure 11, the main lever (210) connects to an operating member (300) via a closed cam connection comprising an L-shaped groove (310) and a projection (315). The operating member (300) is rotatable about a pivot (320). In the preferred embodiment, operating member 300 is in the form of a plate.

Rotation of the operating member (300) about the pivot (320) causes the operating member (300) to act against a retention spring (not shown) and to disengage the brake and activate the motor via a main micro-switch (400), as described below.

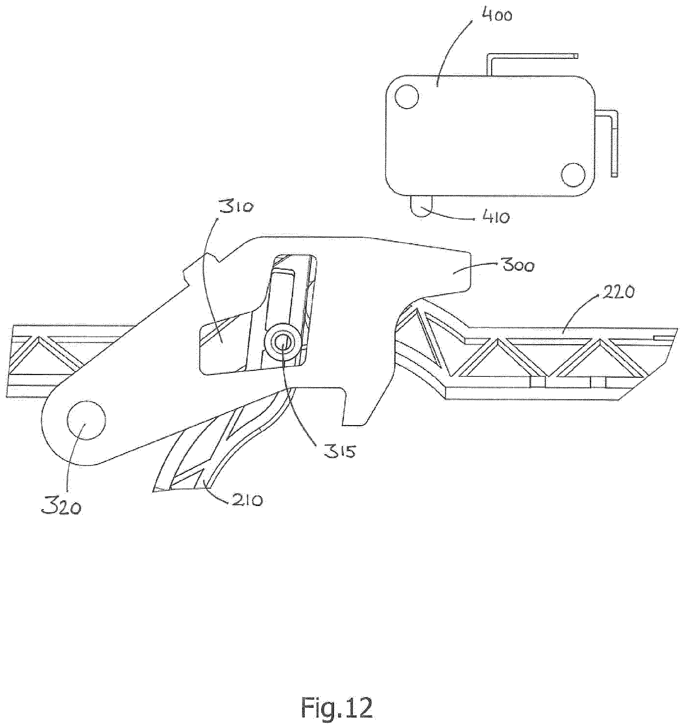

Figure 12 shows the main lever (210), handle beam (220) and operating member (300) in a first configuration, where neither the rear trigger (135) nor any of the front triggers (142, 144, 146) has been activated. The projection (315) sits in the crook of the L-shaped groove (310) in the operating member (300). Operating member (300) is in the braking position.

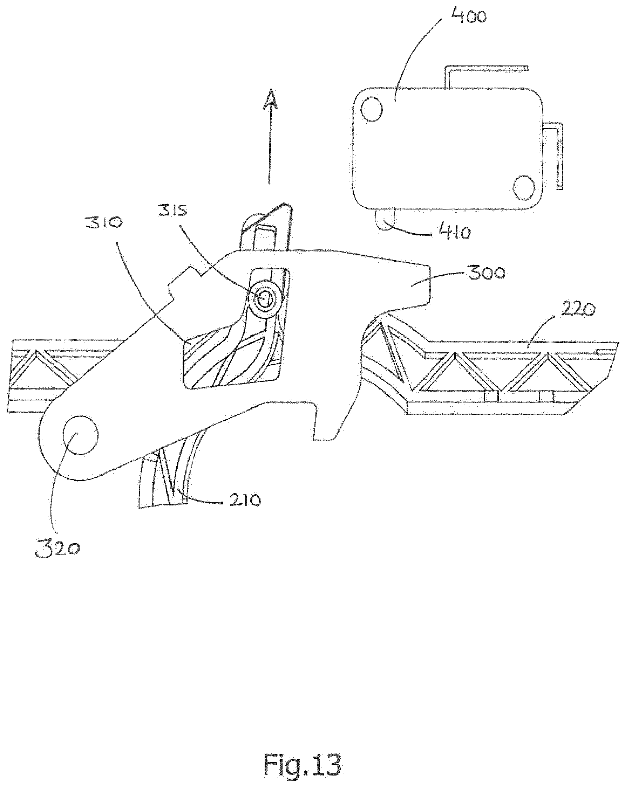

Figure 13 shows the main lever (210), handle beam (220) and operating member (300) in a second configuration, where only the rear trigger (135), and none of the front triggers (142, 144, 146), has been activated. The main lever (210) has been driven forward in the direction of the arrow via the mechanism described above. The projection (315) has been driven forwards into one of the legs of the L-shaped groove (310) in the operating member (300). However, this does not rotate the operating member (300) about its pivot (320), and therefore this does not function to disengage the brake or activate the motor via a main micro-switch (400). The operating member therefore remains in the braking position.

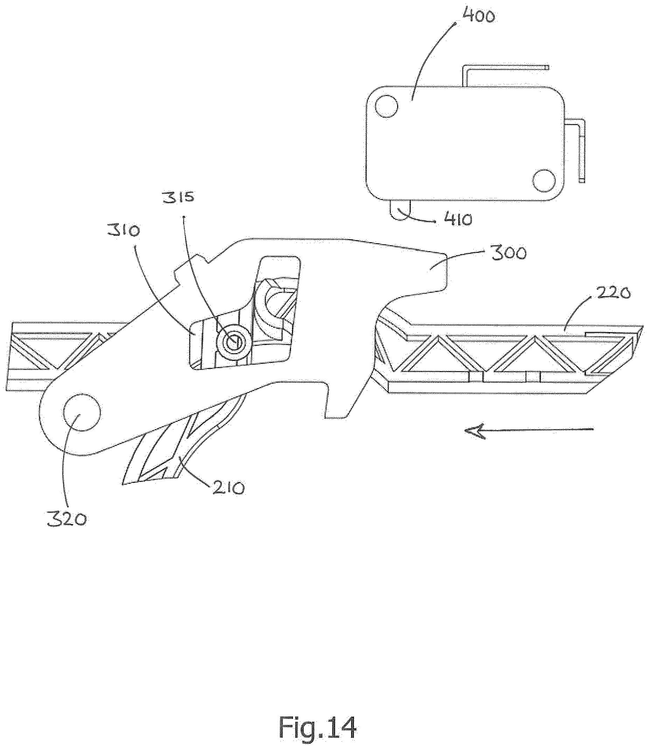

Figure 14 shows the main lever (210), handle beam (220) and operating member (300) in a third configuration, where at least one of the front triggers (142, 144, 146), has been activated, but the rear trigger (135) has not. The main lever (210) therefore remains in its backward position, and the projection (315) sits along the bottom edge of the L-shaped groove (310) in the operating member (300). However, since at least one of the front triggers (142, 144, 146), has been activated, the handle beam (220) has been moved sideways (left) in the direction of the arrow, moving the main lever (210) with it. The projection (315) has been driven sideways into the other leg of the L-shaped groove (310) in the operating member (300). Therefore the operating member (300) again does not rotate about its pivot (320), and this position does not function to disengage the brake or activate the motor via a main micro-switch (400), so the operating member remains in the braking position.

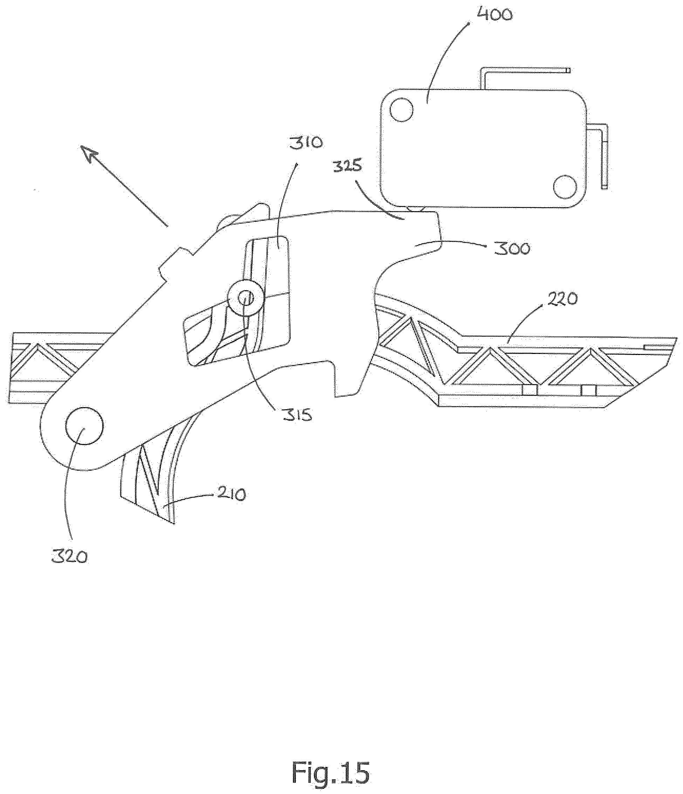

Figure 15 shows the main lever (210), handle beam (220) and operating member (300) in a fourth configuration, where both the rear trigger (135) and at least one of the front triggers (142, 144, 146), has been activated. Owing to the rear trigger (135) being depressed, the main lever (210) has been driven forward horizontally and the projection (315) has been driven forwards. Furthermore, since at least one of the front triggers (142, 144, 146), has been activated, the handle beam (220) has been moved sideways (left), moving the main lever (210) with it. The projection (315) has therefore also been driven sideways. The combination of both forwards and sideways motion of the projection (315) in the L-shaped groove (310) in the direction of the arrow provides rotational movement of the operating member (300) as the projection (315) engages with the inside edge of the obtuse corner of the L-shaped groove (310). The operating member (300) therefore moves to the activating position, disengages the brake and engages with a microswitch (400) which activates the motor of the device (100). A cam surface (325) is provided on the operating member (300) to engage with a button (410) on the switch.

The order in which the rear trigger (135) and at least one of the front triggers (142, 144, 146) are activated together is interchangeable, and both provide identical means of operation. For example, it does not make a difference if the rear trigger (135) is activated first, and then one of the front triggers (142,144, 146), or if one of the front triggers (142,144, 146) is activated first, and then the rear trigger (135). Alternatively, both the rear trigger (135) and at least one of the front triggers (142, 144, 146) may be activated simultaneously. All of the above activation scenarios will result in the rotation of the operating member (300).

The device comprises a mechanical disc brake to stop the cutting elements, and at the same time the operating member (300) rotates to engage with the microswitch (400), it is simultaneously disengaged from the brake, allowing the cutting elements of the device to be activated.

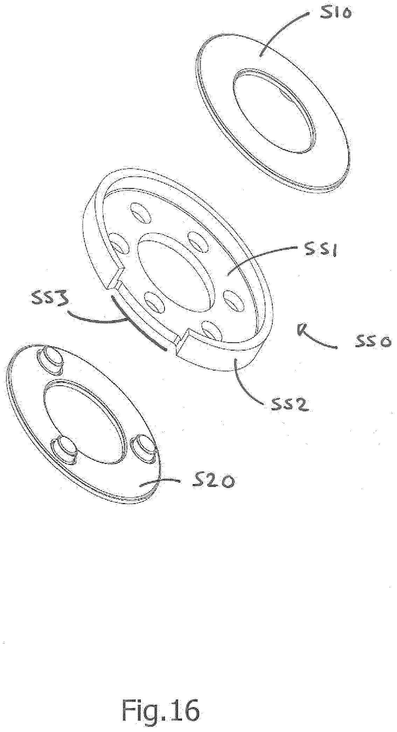

As shown in figure 16, the brake system comprises an upper brake disc (510) and a lower brake disc (520) separated by a blocking washer (550). The blocking washer comprises an annular disc body (551) surrounded by an incomplete collar (552) which is taller than the disc body (551) in at least one direction. There is a break (553) in the incomplete collar (552) and it does not extend fully around the circumference of the disc body (551).

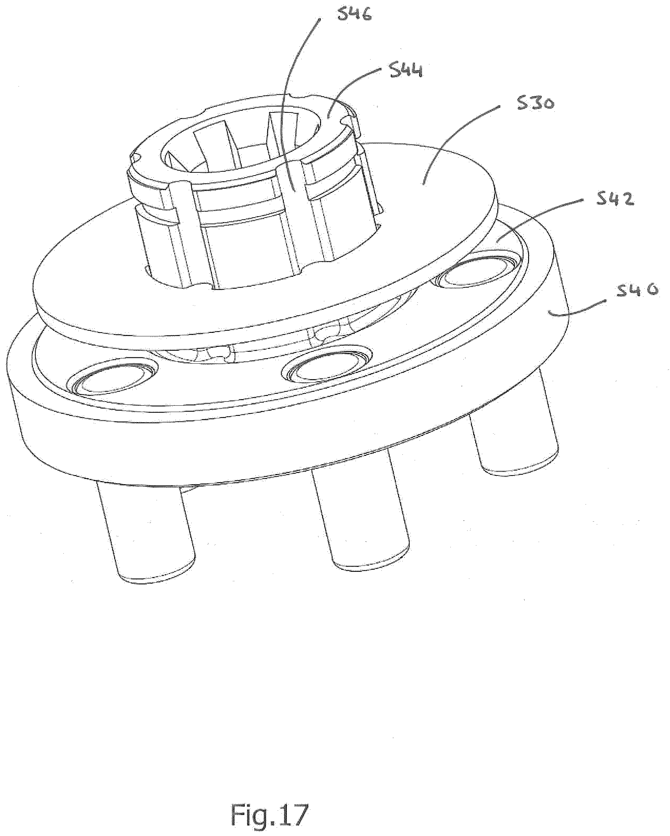

As shown in figure 17, the brake system also comprises a brake washer (530) engaged with a drive-out planet carrier (540). The drive-out planet carrier comprises an annular disc body (542) with a cylindrical hollow shaft (544) extending axially from the central aperture, the outside of the shaft having groves (546) extending in the axial direction. The brake washer (530) is engaged with the grooved shaft (544), is able to move axially up and down the shaft, but the grooves (546) ensure it always rotates with the drive-out planet carrier (540).

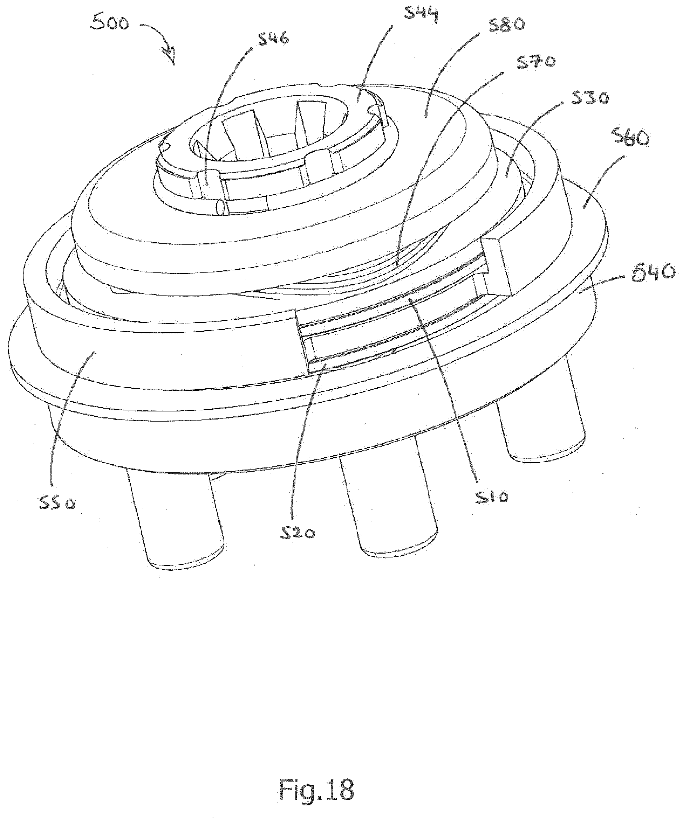

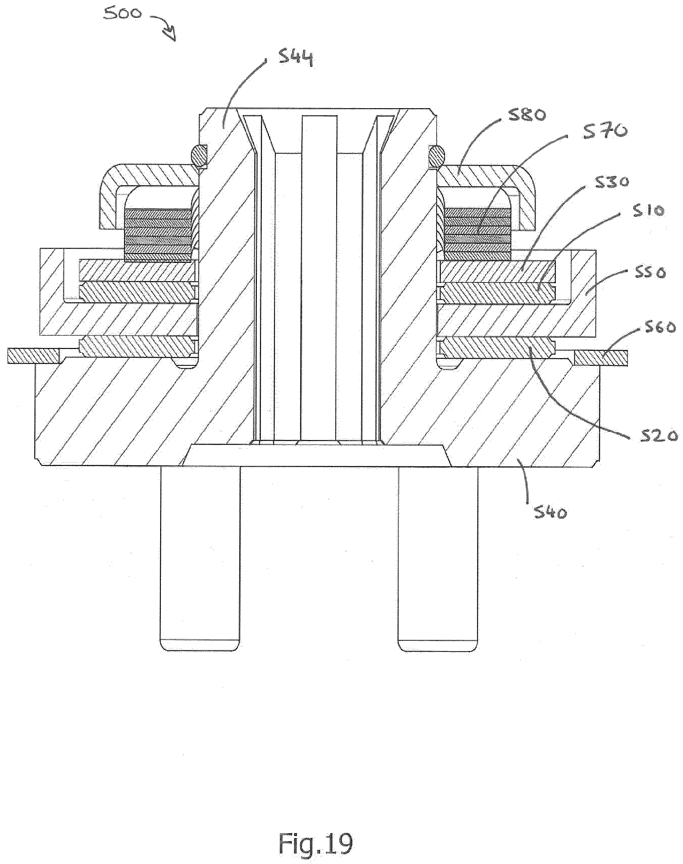

Figures 18 and 19 show the complete brake system (500), also comprising a shim (560) extending from the top of the annular disc body (542) of the drive-out planet carrier (540), springs (570) pushing down on the brake washer (530), and a locking ring (580) keeping the springs (570) in place. All elements of the brake system have a central aperture, and the grooved shaft (544) of the drive-out planet carrier (540) passes through all other components, holding them in place. The hollow shaft (544) engages with the main drive rotor (not shown) of the device (100).

The brake pads (510, 520) rotate with the blocking washer (550) owing to friction forces between them. The friction force is provided by the springs (570) which force together the brake disc assembly between the drive-out planet carrier (540) and the brake washer (530).

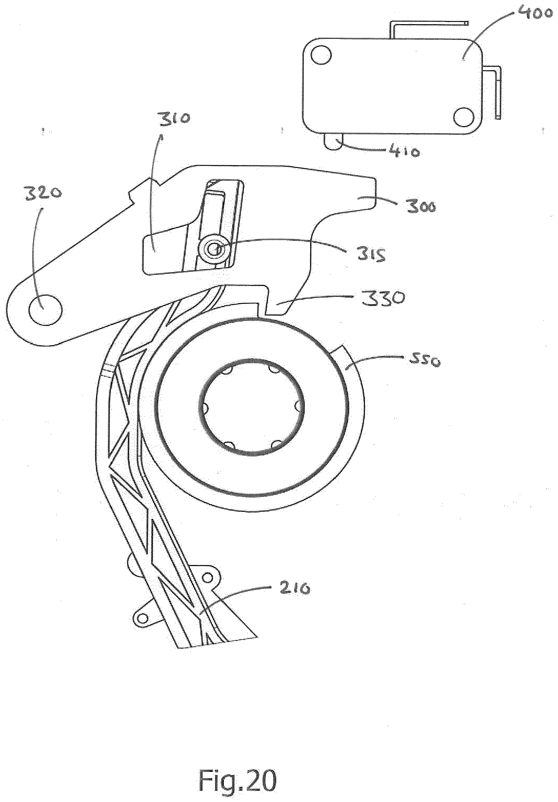

As seen in figures 20 and 12, when the user releases either of the rear trigger (135) or all front triggers (142, 144, 146), the operating member (300) will return to its primary position, and the microswitch (400) will be deactivated. Furthermore, the brake-activating dog or projection (330) of the operating member (300) will engage with the break in the collar of the blocking washer (550), and stop the blocking washer from rotating further. The friction force built up by the brake pads (510, 520) pushing against the blocking washer (550) slows down the rotating components of the brake system, and the device is brought to a stop.

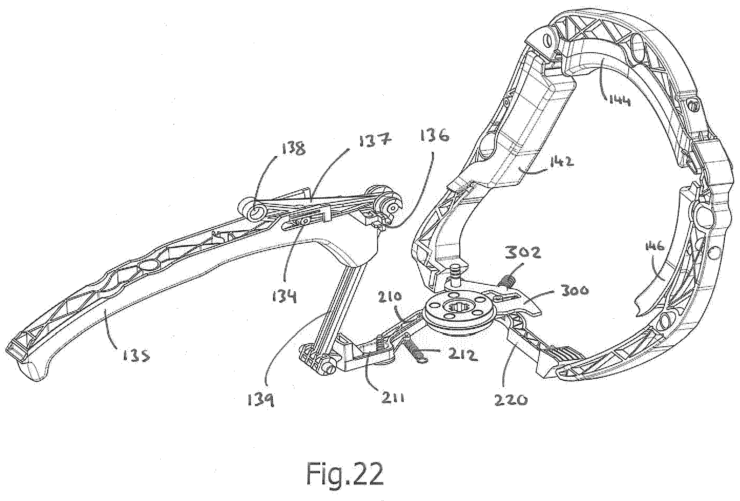

Figure 22 shows the complete switch and brake mechanism in situ. The operating member (300) is returned to its primary un-rotated position by way of a compression spring (302) acting against the rotation of the operating member (300). Therefore, if either the rear trigger (135) or all of the front triggers (142, 144, 146) are released, the operating member (300) will return to its primary position, engaged with the blocking washer and disengaged from the micro-switch (400). There is also provided a second retention spring (212) which works to urge the main lever (210) backwards when the rear trigger (135) is released, and laterally (right) when the front triggers (142, 144, 146) are released. When all triggers are released, the main lever (210) is returned to its primary resting position.

## Claims

1. A switch and brake control system for a power tool comprising a motor which drives a cutting element, the control system comprising;
a switch (400), operable to activate the motor,
a brake (500), operable to transmit a braking force to the cutting element,
an operating member (300) movable from a braking position in which the operating member causes the brake (500) to be applied and the switch (400) to be deactivated, to an activating position in which the operating member (300) releases the brake (500) and activates the switch (400), the operating member (300) being resiliently biased towards the braking position,
a first user control (135) and a second user control (142; 144; 146),
characterized it that the control system further comprises a first operating mechanism (210) coupled between the first user control (135) and the operating member (300), and
a second operating mechanism (220) coupled between the second user control (142; 144; 146) and the operating member (300),
wherein the operating mechanisms (210, 220) are configured to move the operating member (300) from the braking position to the activating position against the biasing force only when both first (135) and second user controls (142; 144; 146) receive a user input.

2. The control system of claim 1, wherein the operating mechanisms (210, 220) are mechanical linkages which move on receipt of a user input to their respective user controls (135, 142; 144; 146).

3. The control system of claim 2, wherein, when user inputs are applied to both user controls (135, 142; 144; 146)., the movement of each operating mechanism (210, 220) is combined at the operating member (300) to move the operating member from the braking position to the activating position.

4. The control system of any preceding claim, wherein one of the first (210) and second (220) operating mechanisms includes a projection (315) which engages with and moves the operating member (300) from the braking position to the activating position.

5. The control system of claim 4, wherein the projection (315) engages with a slot (310) in the operating member (300).

6. The control system of claim 5, wherein the slot (310) is substantially L-shaped.

7. The control system of any preceding claim, wherein the operating member (300) includes a cam surface (325) which engages with the switch (400) in the activating position.

8. The control system of any preceding claim, wherein the operating member (300) includes a brake-activating projection (330) which engages with the brake in the braking position.

9. The control system according to claim 8, wherein the brake (500) comprises;
a rotating brake disc (510;520), and
a rotating blocking washer (550) immediately adjacent to brake disc (510;520), the blocking washer having an annular disc body (551) with a break section (553) in the circumference, and wherein
when in the braking position, the brake-activating projection (330) engages with the break section (553) and prevents rotation of the blocking washer (500).

10. The control system according to claim 9, wherein the at least one break section (553) is formed in an incomplete collar (552) surrounding the annular disc body (551).

11. The control system according to claims 9 or 10, the brake (500) comprising two brake discs (510,520) located on either side of the blocking washer (550).

12. The control system of any preceding claim, wherein the user controls (135, 142; 144; 146) are mechanical triggers.

13. The control system of any preceding claim, wherein the second user control comprises a plurality of user controls (142, 144, 146), any one of which may receive a user input to move the operating member (300) when the first user control (135) also receives a user input.

14. The control system of claim 13, wherein the second user control (142, 144, 146) comprises a plurality of mechanical triggers configured such that when one of the mechanical triggers is moved by a user input, the other mechanical triggers remain stationary.

15. The control system according to claims 13 or 14, wherein
the second user control (142, 144, 146) comprises a plurality of mechanical triggers configured such that
each trigger (142, 144, 146) is orientated differently to each other, and when any of the triggers (142, 144, 146) receives a user input, the single corresponding operating mechanism (220) is moved in the same direction.

## Patentansprüche

1. Schalt- und Bremssteuersystem für ein motorgetriebenes Werkzeug, das einen Motor enthält, der ein Schneidelement antreibt, wobei das Steuersystem Folgendes umfasst:
einen Schalter (400), der betreibbar ist, den Motor zu aktivieren,
eine Bremse (500) die betreibbar ist, eine Bremskraft an das Schneidelement zu übertragen,
ein Bedienungselement (300), das aus einer Bremsposition, in der das Bedienungselement bewirkt, dass die Bremse (500) angewendet wird und der Schalter (400) deaktiviert wird, in eine Aktivierungsposition, in der das Bedienungselement (300) die Bremse (500) löst und den Schalter (400) aktiviert, bewegt werden kann, wobei das Bedienungselement (300) in die Bremsposition elastisch vorbelastet ist, und
eine erste Anwendersteuerung (135) und eine zweite Anwendersteuerung (142; 144; 146),
**dadurch gekennzeichnet, dass** das Steuersystem ferner Folgendes umfasst:
einen ersten Bedienungsmechanismus (210), der zwischen die erste Anwendersteuerung (135) und das Bedienungselement (300) gekoppelt ist, und
einen zweiten Bedienungsmechanismus (220), der zwischen die zweite Anwendersteuerung (142; 144; 146) und das Bedienungselement (300) gekoppelt ist,
wobei die Bedienungsmechanismen (210, 220) konfiguriert sind, das Bedienungselement (300) nur dann von der Bremsposition entgegen der Vorbelastungshaft in die Aktivierungsposition zu bewegen, wenn die erste Anwendersteuerung (135) und die zweite Anwendersteuerung (142; 144; 146) eine Anwendereingabe empfangen.

2. Steuersystem nach Anspruch 1, wobei die Bedienungsmechanismen (210, 220) mechanische Gestänge sind, die sich bei Empfang einer Anwendereingabe zu ihren jeweiligen Anwendersteuerungen (135, 142; 144; 146) bewegen.

3. Steuersystem nach Anspruch 2, wobei dann, wenn Anwendereingaben in beide Anwendersteuerungen (135, 142; 144; 146) eingegeben werden, die Bewegungen der Bedienungsmechanismen (210, 220) bei dem Bedienungselement (300) kombiniert werden, um das Bedienungselement von der Bremsposition in die Aktivierungsposition zu bewegen.

4. Steuersystem nach einem vorhergehenden Anspruch, wobei entweder der erste (210) oder der zweite (220) Bedienungsmechanismus einen Vorsprung (315) umfasst, der mit dem Bedienungselement (300) in Eingriff ist und dieses von der Bremsposition in die Aktivierungsposition bewegt.

5. Steuersystem nach Anspruch 4, wobei der Vorsprung (315) mit einem Schlitz (310) in dem Bedienungselement (300) in Eingriff ist.

6. Steuersystem nach Anspruch 5, wobei der Schlitz (310) im Wesentlichen L-förmig ist.

7. Steuersystem nach einem vorhergehenden Anspruch, wobei das Bedienungselement (300) eine Nockenoberfläche (325) aufweist, die in der Aktivierungsposition mit dem Schalter (400) in Eingriff ist.

8. Steuersystem nach einem vorhergehenden Anspruch, wobei das Bedienungselement (300) einen Bremsaktivierungsvorsprung (330) umfasst, der in der Bremsposition mit der Bremse in Eingriff ist.

9. Steuersystem nach Anspruch 8, wobei die Bremse (500) Folgendes umfasst:
eine rotierende Bremsscheibe (510; 520) und
eine rotierende Blockierscheibe (550) unmittelbar benachbart zu der Bremsscheibe (510; 520), wobei die Blockierscheibe einen ringförmigen Scheibenkörper (551) mit einem Unterbrechungsabschnitt (553) im Umfang besitzt, und wobei
in der Bremsposition der Bremsaktivierungsvorsprung (330) mit dem Unterbrechungsabschnitt (553) in Eingriff ist und die Drehung der Blockierscheibe (500) verhindert.

10. Steuersystem nach Anspruch 9, wobei der wenigstens eine Unterbrechungsabschnitt (553) als ein unvollständiger Kranz (552) ausgebildet ist, der den ringförmigen Scheibenkörper (551) umgibt.

11. Steuersystem nach den Ansprüchen 9 oder 10, wobei die Bremse (500) zwei Bremsscheiben (510, 520) umfasst, die sich auf beiden Seiten der Blockierscheibe (550) befinden.

12. Steuersystem nach einem vorhergehenden Anspruch, wobei die Anwendersteuerungen (135, 142; 144; 146) mechanische Auslöser sind.

13. Steuersystem nach einem vorhergehenden Anspruch, wobei die zweite Anwendersteuerung mehrere Anwendersteuerungen (142; 144; 146) umfasst, wovon irgendeine eine Anwendereingabe empfangen kann, um das Bedienungselement (300) zu bewegen, wenn die erste Anwendersteuerung (135) ebenfalls eine Anwendereingabe empfängt.

14. Steuersystem nach Anspruch 13, wobei die zweite Anwendersteuerung (142; 144; 146) mehrere mechanische Auslöser umfasst, die in der Weise konfiguriert sind, dass dann, wenn einer der mechanischen Auslöser durch eine Anwendereingabe bewegt wird, die anderen mechanischen Auslöser unbewegt bleiben.

15. Steuersystem nach den Ansprüchen 13 oder 14, wobei die zweite Anwendersteuerung (142; 144; 146) mehrere mechanische Auslöser umfasst, die in der Weise konfiguriert sind, dass
jeder Auslöser (142; 144; 146) anders als die anderen Auslöser orientiert ist und
dann, wenn irgendeiner der Auslöser (142; 144; 146) eine Anwendereingabe empfängt, der einzige entsprechende Bedienungsmechanismus (220) in dieselbe Richtung bewegt wird.

## Revendications

1. Système de commande d'interrupteur et de frein pour un outil électrique comprenant un moteur qui entraîne un élément de coupe, le système de commande comprenant :
un interrupteur (400), utilisable pour activer le moteur,
un frein (500), utilisable pour transmettre une force de freinage à l'élément de coupe,
un organe fonctionnel (300) déplaçable d'une position de freinage, dans laquelle l'organe fonctionnel provoque l'application du frein (500) et la désactivation de l'interrupteur (400), à une position d'activation, dans laquelle l'organe fonctionnel (300) débloque le frein (500) et active l'interrupteur (400), l'organe fonctionnel (300) étant sollicité élastiquement vers la position de freinage,
une première commande utilisateur (135) et une deuxième commande utilisateur (142 ; 144 ; 146),
le système de commande étant **caractérisé en ce qu'**il comprend en outre :
un premier mécanisme fonctionnel (210) couplé entre la première commande utilisateur (135) et l'organe fonctionnel (300), et
un deuxième mécanisme fonctionnel (220) couplé entre la deuxième commande utilisateur (142 ; 144 ; 146) et l'organe fonctionnel (300),
dans lequel les mécanismes fonctionnels (210, 220) sont configurés pour déplacer l'organe fonctionnel (300) de la position de freinage à la position d'activation à l'encontre de la force de sollicitation uniquement lorsque la première commande utilisateur (135) et la deuxième commande utilisateur (142 ; 144 ; 146) reçoivent toutes deux une entrée utilisateur.

2. Système de commande selon la revendication 1, dans lequel les mécanismes fonctionnels (210, 220) sont des liaisons mécaniques qui se déplacent dès réception d'une entrée utilisateur appliquée à leur commande utilisateur respective (135, 142 ; 144 ; 146).

3. Système de commande selon la revendication 2, dans lequel, lorsque des entrées utilisateur sont appliquées aux deux commandes utilisateur (135, 142 ; 144 ; 146), le déplacement de chaque mécanisme fonctionnel (210, 220) se combine au niveau de l'organe fonctionnel (300) pour déplacer l'organe fonctionnel de la position de freinage à la position d'activation.

4. Système de commande selon l'une quelconque des revendications précédentes, dans lequel l'un des premier (210) et deuxième (220) mécanismes fonctionnels comporte une saillie (315) qui coopère avec l'organe fonctionnel (300) et le déplace de la position de freinage à la position d'activation.

5. Système de commande selon la revendication 4, dans lequel la saillie (315) coopère avec une fente (310) dans l'organe fonctionnel (300).

6. Système de commande selon la revendication 5, dans lequel la fente (310) est sensiblement en forme de L.

7. Système de commande selon l'une quelconque des revendications précédentes, dans lequel l'organe fonctionnel (300) comporte une surface de came (325) qui coopère avec l'interrupteur (400) dans la position d'activation.

8. Système de commande selon l'une quelconque des revendications précédentes, dans lequel l'organe fonctionnel (300) comporte une saille d'activation de frein (330) qui coopère avec le frein dans la position de freinage.

9. Système de commande selon la revendication 8, dans lequel le frein (500) comprend :
un disque de frein rotatif (510 ; 520), et
une rondelle bloquante rotative (550) immédiatement adjacente au disque de frein (510 ; 520), la rondelle bloquante présentant un corps de disque annulaire (551) avec un segment interrompu (553) sur la circonférence, et dans lequel
en position de freinage, la saillie d'activation de frein (330) coopère avec le segment interrompu (553) et empêche la rotation de la rondelle bloquante (500).

10. Système de commande selon la revendication 9, dans lequel l'au moins un segment interrompu (553) est formé dans un collet incomplet (552) entourant le corps de disque annulaire (551).

11. Système de commande selon les revendications 9 ou 10, le frein (500) comprenant deux disques de frein (510, 520) situés de part et d'autre de la rondelle bloquante (550).

12. Système de commande selon l'une quelconque des revendications précédentes, dans lequel les commandes utilisateur (135, 142 ; 144 ; 146) sont des déclencheurs mécaniques.

13. Système de commande selon l'une quelconque des revendications précédentes, dans lequel la deuxième commande utilisateur comprend une pluralité de commandes utilisateur (142, 144, 146), l'une quelconque desquelles est susceptible de recevoir une entrée utilisateur pour déplacer l'organe fonctionnel (300) lorsque la première commande utilisateur (135) reçoit aussi une entrée utilisateur.

14. Système de commande selon la revendication 13, dans lequel la deuxième commande utilisateur (142, 144, 146) comprend une pluralité de déclencheurs mécaniques configurés de manière à ce que, lorsque l'un des déclencheurs mécaniques est déplacé par une entrée utilisateur, les autres déclencheurs mécaniques restent fixes.

15. Système selon la revendication 13 ou 14, dans lequel
la deuxième commande utilisateur (142, 144, 146) comprend une pluralité de déclencheurs mécaniques configurés de manière à ce que
chaque déclencheur (142, 144, 146) soit orienté différemment par rapport aux autres, et
lorsque l'un quelconque des déclencheurs (142, 144, 146) reçoit une entrée utilisateur, le mécanisme fonctionnel unique correspondant (220) se déplace dans la même direction.
